# EUROPEAN PATENT SPECIFICATION

(11) **EP 2 433 073 B1**
(45) Date of publication and mention of the grant of the patent: **14.10.2015**
(21) Application number: 10720586.6
(22) Date of filing: 13.05.2010
(51) Int. Cl.: F25D 11/02, F25D 29/00

(54) **A COOLING DEVICE COMPRISING TWO COMPARTMENTS**
KÄLTEGERÄT MIT ZWEI FÄCHERN
DISPOSITIF DE REFROIDISSEMENT COMPRENANT DEUX COMPARTIMENTS

(30) Priority: 22.05.2009 TR 200903966
(43) Date of publication of application: 28.03.2012
(73) Proprietor: Arçelik Anonim Sirketi, 34950 Istanbul (TR)
(72) Inventor: ERCAN, Turgay, 34950 Istanbul (TR); OTURAK, Mehmet, 34950 Istanbul (TR)
(86) International application number: PCT/EP2010/056620
(87) International publication number: WO 2010/133506

(56) References cited:
- EP-A1- 2 175 216
- WO-A1-02/052209
- DE-A1- 19 613 859
- DE-A1- 19 718 609
- DE-C1- 19 828 061

## Description

The present invention relates to a cooling device comprising a cooling compartment and a freezing compartment.

Household cooling devices generally consist of two separate compartments, cooling and freezing, kept at different temperatures. Cooling compartments are utilized preferably for the storing of fresh food and freezing compartments for the storing of frozen food. In the state of the art, the cooling device with two compartments kept at different temperatures is provided to cool by means of a different cooling circuit for each compartment. Such cooling devices have high cost.

The cooling devices with two compartments operating at different temperatures can also be provided to cool by means of a single cooling circuit and a heat sensor disposed in the cooling compartment. The major problem in the refrigerators wherein the cooling operation is realized by taking the temperature of the cooling compartment as reference is encountered when the external ambient temperature is lower than the determined value. In this case, the heat gain of the cooling compartment of the refrigerator is very low and the runtime ratio of the compressor and thus the cooling efficiency of the freezing department decreases. When the compressor does not operate for a long time, the temperature of the freezing compartment exceeds the desired temperature value, and causes the storage time of the frozen food to decrease or the food to be spoiled.

In the state of the art embodiments, a heating element is placed in the cooling compartment of the refrigerator to solve the problem. In case the external ambient temperature is lower than the determined value, the temperature of the cooling compartment is increased by the heating element being activated and thus the operation of the compressor is provided. In this embodiment, in cases wherein the external ambient temperature is low and the compressor does not operate for a long time, temperature variations are observed in both compartments. Furthermore, the temperature of the freezing compartment cannot be prevented from exceeding the determined value.

In the French Patent No. FR2254762, an embodiment of the cooling devices with two compartments operating at different temperatures which is realized by means of a heat sensor disposed in the cooling compartment is described. In this embodiment, to solve the above-mentioned problems, a more efficient runtime ratio for the compressor is tried to be provided by enabling the heater to be activated when the compressor does not operate. This method causes energy consumption since the heater is operated in cases wherein the external ambient temperature is high.

In another state of the art embodiment, Italian Patent No. IT1027733, the heater is provided to be deactivated by means of a manual control at high temperatures. This technique is not sensitive enough since it is dependent on the user.

Another state of the art embodiment is provided in the French Patent No. FR2347634. In this embodiment, a heat sensor is mounted outside the refrigerator and thus the external ambient temperature can be detected. However, this technique is considerably complex and can be affected by the ambient temperature changes and the costs increase due to the heat sensor mounted outside the refrigerator.

In the European Patent Application No. EP0388726 wherein another state of the art embodiment is provided, a timer is added to the system in order to reduce the energy consumption. The ambient temperature is detected by means of a sensor disposed in the cooling compartment. If the stopping time of the compressor is lower than the determined delay time, the heater is not activated, thus unnecessary energy consumption is prevented. In cases wherein the external ambient temperature is low, the stopping time of the compressor is higher than the determined delay time and the heater is activated. Although this technique is simpler and more efficient compared to the other techniques, since the heating operation starts after a determined delay time, high power heating elements are needed and since the heating element occupies much space, the heating element causes local temperature increases.

German patent No. DE 198 28 061 C1 describes a cooling device having a cooling compartment with a heat sensor, a freezing compartment, a compressor, and an evaporator. The temperature control of the cooling device is carried out via both a first operation scheme and a second operation scheme. In the first operation scheme, the compressor is activated when the temperature detected by the heat sensor exceeds an upper value, and it is deactivated when said temperature reaches a lower value. In the second operation scheme, the compressor is activated for a predetermined running time after the shut-off-time of the compressor reaches a predetermined time value. A cooling device according to the preamble of claim 1 is known from DE 19 828 061 C1.

The aim of the present invention is the realization of a cooling device wherein efficient cooling is performed independently of the ambient temperature.

The aim of the present invention is achieved by a cooling device according to claim 1.

In the cooling device of the present invention, in case the off-time of the compressor reaches the limit time predetermined by the producer, the control unit activates the compressor without checking whether the cut-in temperature of the compressor is reached. Thus, the risk that, in case the external ambient temperature is low, the freezing compartment cannot be cooled efficiently as the cut-in temperature of the compressor cannot be reached for a long time is eliminated.

In the embodiment of the present invention, the control unit monitors the cooling operation by checking the temperature of the cooling compartment measured by the heat sensor. In this embodiment, when the compressor is activated since it remains closed for a time longer than the limit time, the operating time is at least as the low limit value predetermined by the producer. Thus, the deactivation of the compressor is prevented before the realization of the aimed improvement in the temperature of the freezing compartment.

In another embodiment, the control unit monitors the cooling operation by checking the temperature of the evaporator of the cooling compartment measured by the heat sensor. In this embodiment, when the compressor is activated since it remains closed for a time longer than the limit time, the operating time is at most as the high limit value predetermined by the producer. Thus, the compressor is enabled to be deactivated without causing the cooling compartment to be cooled for an undesired amount.

By means of the present invention, the need of the heating of the cooling compartment to provide the activation of the compressor and the necessity of the utilization of the heater for this purpose are eliminated.

The cooling device realized in order to attain the aim of the present invention is illustrated in the attached figures, where:

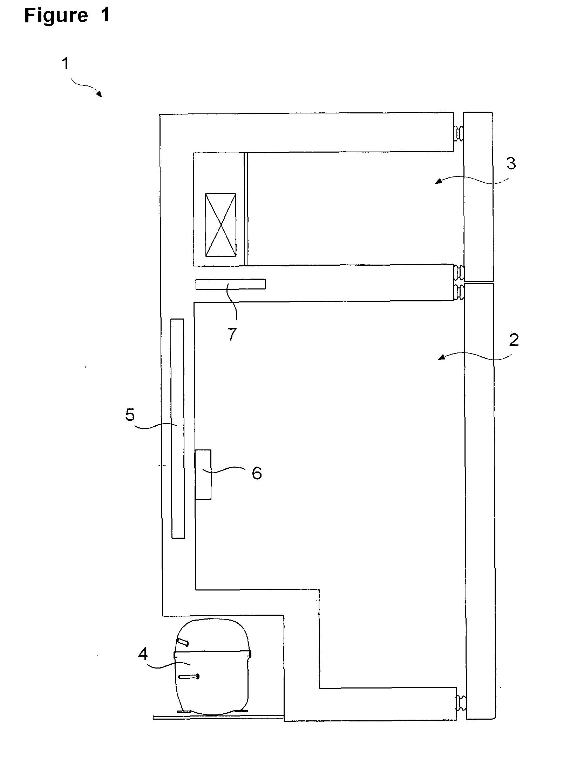

Figure 1 - is the schematic view of a cooling device.

The elements illustrated in the figures are numbered as follows:
1. Cooling device
2. Cooling compartment
3. Freezing compartment
4. Compressor
5. Evaporator
6. Heat sensor
7. Control unit

The cooling device (1) of the present invention comprises:
- a cooling compartment (2) wherein the foods to be cooled are placed,
- a freezing compartment (3) wherein the foods are placed to be frozen, which is kept at temperatures lower than the cooling compartment (2),
- a compressor (4) which enables the compression of the refrigerant fluid,
- at least one evaporator (5) which provides the cooling of the cooling and freezing compartments (2, 3) by providing heat transfer between the refrigerant fluid and the environment,
- a heat sensor (6) which measures the temperature for the control of the cooling operation and
- at least one control unit (7) which controls the operation of the compressor (4) according to the data detected by the heat sensor (6).

The following symbols are used in explicating the cooling device (1) of the present invention:
T_{S} : Temperature detected by the heat sensor (6)
T_{Scut-in} : Cut-in temperature predetermined by the producer when detected by the heat sensor (6) which provides the activation of the compressor (4) by the control unit (7).
T_{Scut-out} : Cut-out temperature predetermined by the producer when detected by the heat sensor (6) which provides the deactivation of the compressor (4) by the control unit (7).
t_{compOFF}: Time wherein the compressor (4) remains deactivated
t_{compOFFlim}: Limit time predetermined by the producer during which the compressor (4) remains deactivated
t_{compON}: Operating time of the compressor (4) activated in case the off-time (t_{compOFF}) of the compressor (4) reaches the limit time (t compOFFlim) predetermined by the producer.

The control unit (7) compares the temperature (T_{S}) detected by the heat sensor (6) and the cut-out temperature (T_{Scut-out}) of the compressor (4) predetermined by the producer during the cooling operation. When the temperature (T_{S}) detected by the heat sensor (6) reaches the cut-out temperature (T_{Scut-out}) of the compressor (4) predetermined by the producer, the control unit (7) deactivates the compressor (4) and thus the cooling operation is paused. When the compressor (4) is deactivated, the control unit (7) this time compares the temperature (T_{S}) detected by the heat sensor (6) and the cut-in temperature (T_{Scut-in}) of the compressor (4) predetermined by the producer. When the temperature (T_{S}) detected by the heat sensor (6) reaches the cut-in temperature (T_{Scut-in}) of the compressor (4) predetermined by the producer, the control unit (7) activates the compressor (4) and thus the cooling operation is restarted. The cooling operation is realized in this cycle.

During this cycle, in case the time wherein the compressor (4) remains deactivated (t_{compOFF}) reaches the limit time (t_{compOFFlim}) predetermined by the producer, the control unit (7) activates the compressor (4) even if the temperature (T_{S}) detected by the heat sensor (6) does not reach the cut-in temperature (T_{Scut-in}) of the compressor (4) by the control unit (7) when it is detected by the heat sensor (6), predetermined by the producer. Thus, especially in case the external environment is cold, the compressor (4) is provided to be operated for a long time and the temperature of the freezing compartment (3) is prevented from exceeding the temperature needed.

In the embodiment of the present invention, the heat sensor (6) detects the temperature of the cooling compartment (2). The control unit (7) controls the cooling operation by taking the temperature of the cooling compartment (2) as reference. In this embodiment, in case the off-time (t compOFF) of the compressor (4) reaches the limit time (t_{compOFFlim}) predetermined by the producer, the control unit (7) activates the compressor (4) at least for a time (t_{compON}) predetermined by the producer. Even if the temperature (T_{S}) detected by the heat sensor (6) reaches the cut-out temperature (T_{Scut-out}) of the compressor (4) predetermined by the producer before this time (t_{compON}) is completed, the compressor (4) is not deactivated before the time (t_{compON}) is completed. If the temperature (T_{S}) detected by the heat sensor (6) does not reach the cut-out temperature (T_{Scut-out}) of the compressor (4) predetermined by the producer when the time (t_{compON}) is completed, the compressor (4) is continued to be operated until the cut-out temperature (T Scut-out) of the compressor (4) is reached. Thus, the compressor (4) is prevented from being stopped before the temperature of the freezing compartment (3) is reduced by the desired amount.

In another embodiment, the heat sensor (6) detects the temperature of the evaporator (5) which provides the cooling of the cooling compartment (2). The control unit (7) controls the cooling operation by taking the temperature of the evaporator (5) which provides the cooling of the cooling compartment (2) as reference. In this embodiment, in case the off-time (t_{compOFF}) of the compressor (4) reaches the limit time (t_{compOFFlim}) predetermined by the producer, the control unit (7) activates the compressor (4) at least for a time (t_{compON}) predetermined by the producer. In case the temperature (T_{S}) detected by the heat sensor (6) reaches the cut-out temperature (T_{Scut-out}) of the compressor (4) predetermined by the producer before this time (t_{compON}) is completed, the compressor (4) is deactivated. Even if the temperature (T_{S}) detected by the heat sensor (6) does not reach the cut-out temperature (T_{Scut-out}) of the compressor (4) predetermined by the producer when the time (t_{compON}) is completed, the compressor (4) is deactivated. Thus the cooling compartment (2) is prevented from being cooled for an amount which is harmful for the food located therein.

## Claims

1. A cooling device (1) comprising
a cooling compartment (2) wherein the foods are placed to be cooled,
a freezing compartment (3) wherein the foods are placed to be frozen, which is kept at temperatures lower than the cooling compartment (2),
a compressor (4) which provides the compression of the refrigerant fluid, at least one evaporator (5) which provides the cooling of the cooling and freezing compartments (2, 3) by providing heat transfer between the refrigerant fluid and the environment,
a heat sensor (6) which measures the temperature of the cooling compartment (3) for the control of the cooling operation and
a control unit (7) which
- controls the operation of the compressor (4) according to the data detected by the heat sensor (6)
- compares the temperature (Ts) detected by the heat sensor (6) and the cut-out temperature (T_{Scut-out}) of the compressor (6) predetermined by the producer during the cooling operation and deactivates the compressor (4) when the temperature (T_{S}) detected by the heat sensor (6) reaches the cut-out temperature (T_{Scut-out}) of the compressor (4) predetermined by the producer
- compares the temperature (Ts) detected by the heat sensor (6) and the cut-in temperature (T_{Scut-in}) of the compressor (4) predetermined by the producer when the compressor (4) is deactivated and reactivates the compressor (4) when the temperature (T_{S}) detected by the heat sensor (6) reaches the cut-in temperature (T_{Scut-in}) of the compressor (4) predetermined by the producer,
- activates the compressor (4) at least for a time (t_{compON}) predetermined by the producer, in case the time wherein the compressor (4) remains deactivated (t_{compOFF}) reaches the limit time (t_{compOFFlim}) predetermined by the producer, even if the temperature (Ts) detected by the heat sensor (6) does not reach the temperature of the activation (T_{Scut-in}) of the compressor (4),
wherein the compressor (4) is not deactivated before the time (t_{compON}) is completed even if the temperature (T_{S}) detected by the heat sensor (6) reaches the cut-out temperature (T_{Scut-out}) of the compressor predetermined by the producer before this time (t_{compON}) is completed,
**characterized in that**
the compressor (4) is continued to be operated until the cut-out temperature (T_{Scut-out}) of the compressor (4) is reached, if the temperature (T_{S}) detected by the heat sensor (6) does not reach the cut-out temperature (T_{SsCut-out}) of the compressor (4) predetermined by the producer when the time (t_{compON}) is completed.

## Patentansprüche

1. Kühlvorrichtung (1), umfassend:
ein Kühlfach (2), in das zu kühlende Lebensmittel gegeben werden,
ein Gefrierfach (3), in das einzufrierende Lebensmittel gegeben werden und das bei Temperaturen unterhalb des Kühlfachs (2) gehalten wird,
einen Kompressor (4), der für das Verdichten des Kältefluids sorgt,
wenigstens einen Verdampfer (5), der für das Kühlen des Kühl- und des Gefrierfachs (2, 3) sorgt, indem er eine Wärmeübertragung zwischen dem Kältefluid und der Umgebung bereitstellt,
einen Wärmesensor (6), der die Temperatur des Kühlfachs (3) zum Steuern der Kühloption misst, und
eine Steuereinheit (7), die
- den Betrieb des Kompressors (4) anhand der durch den Wärmesensor (6) erfassten Daten steuert,
- die vom Wärmesensor (6) erfasste Temperatur (T_{S}) und die vom Hersteller vorgegebene Abschalttemperatur (T_{Scut-out}) des Kompressors (6) während des Kühlbetriebs vergleicht und den Kompressor (4) deaktiviert, wenn die vom Wärmesensor (6) erfasste Temperatur (T_{S}) die vom Hersteller vorgegebene Abschalttemperatur (T_{Scut-out}) des Kompressors (4) überschreitet
- die vom Wärmesensor (6) erfasste Temperatur (T_{S}) und die vom Hersteller vorgegebene Einschalttemperatur (T_{Scut-in}) des Kompressors (4) vergleicht, während der Kompressor (4) deaktiviert ist, und den Kompressor (4) reaktiviert, wenn die vom Wärmesensor (6) erfasste Temperatur (T_{S}) die vom Hersteller vorgegebene Einschalttemperatur (T_{Scut-in}) des Kompressors (4) erreicht,
- den Kompressor (4) wenigstens für eine Zeit (t_{compON}) aktiviert, die vom Hersteller vorgegeben wird, falls die Zeit, für die der Kompressor (4) deaktiviert bleibt (t_{compOFF}), die vom Hersteller vorgegebene Grenzzeit (t_{compOFFlim}) erreicht, auch wenn die vom Wärmesensor (6) erfasste Temperatur (T_{S}) nicht die Temperatur der Aktivierung (T_{Scut-in}) des Kompressors (4) erreicht,
wobei der Kompressor (4) erst nach dem Ablauf der Zeit (t_{compON}) deaktiviert wird, selbst wenn die vom Wärmesensor (6) erfasste Temperatur (T_{S}) die vom Hersteller vorgegebene Abschalttemperatur (T_{Scut-out}) des Kompressors erreicht, bevor die Zeit (t_{compON}) abgelaufen ist,
**dadurch gekennzeichnet, dass**
der Kompressor (4) weiterhin betrieben wird, bis die Abschalttemperatur (T_{Scut-out}) des Kompressors (4) erreicht wird, wenn die vom Wärmesensor (6) erfasste Temperatur (T_{S}) die vom Hersteller vorgegebene Abschalttemperatur (T_{Scut-out}) des Kompressors (4) nicht erreicht, wenn die Zeit (t_{compON}) abgelaufen ist.

## Revendications

1. Un dispositif de refroidissement (1) comprenant
un compartiment de refroidissement (2) dans lequel les objets à refroidir sont placés, un compartiment de congélation (3) dans lequel les aliments sont placés pour la congélation et qui est gardé à des températures plus basses que celles du compartiment de refroidissement (2),
un compresseur (4) qui permet la compression du fluide frigorigène,
au moins un évaporateur (5) qui permet le refroidissement des compartiments de refroidissement et de congélation (2, 3) en permettant le transfert de la chaleur entre le fluide réfrigérant et le milieu,
un capteur de température (6) qui mesure la température du compartiment de refroidissement (3) pour la commande de l'opération de refroidissement et
une unité de commande (7) qui
- commande l'opération du compresseur (4) en fonction des données détectées par le capteur de température (6),
- compare la température (T_{S}) détectée par le capteur de température (6) et la température de désactivation (T_{Scut-out}) du compresseur (6) prédéterminée par le fabricant au cours de l'opération de refroidissement et désactive le compresseur (4) si la température (T_{S}) détectée par le capteur de température (6) atteint la température de désactivation (T_{Scut-out}) du compresseur (4) prédéterminée par le fabricant,
- compare la température (T_{S}) détectée par le capteur de température (6) et la température d'activation (T_{Scut-in}) du compresseur (4) prédéterminée par le fabricant lorsque le compresseur (4) est désactivé et réactive le compresseur (4) si la température (T_{S}) détectée par le capteur de température (6) atteint la température d'activation (T_{Scut-in}) du compresseur (4) prédéterminée par le fabricant,
- active le compresseur (4) au moins pour un temps (t_{compON}) prédéterminé par le fabricant, au cas où le temps où le compresseur (4) reste désactivé (t_{compOFF}) atteindrait le temps limite (t_{compOFFlim}) prédéterminé par le fabricant, même si la température (T_{S}) détectée par le capteur de température (6) n'atteint pas la température d'activation (T_{Scut-in}) du compresseur (4),
où le compresseur (4) n'est pas désactivé avant que le temps (t_{compON}) est terminé même si la température (T_{S}) détectée par le capteur de température (6) atteint la température de désactivation (T_{Scut-out}) du compresseur prédéterminée par le fabricant avant que ce temps (t_{compON}) est terminé,
**caractérisé en ce que**
le compresseur (4) continue d'être fonctionné jusqu'à ce que la température de désactivation (T_{Scut-out}) du compresseur (4) est atteinte, si la température (T_{S}) détectée par le capteur de température (6) n'atteint pas la température de désactivation (T_{Sscut-out}) du compresseur (4) prédéterminée par le fabricant lorsque le temps (t_{compON}) est terminé.
